# EUROPEAN PATENT APPLICATION

(11) **EP 2 863 330 A1**
(43) Date of publication of application: **22.04.2015**
(21) Application number: 14189465.9
(22) Date of filing: 20.10.2014
(51) Int. Cl.: G06F 21/51, G06F 21/55

(54) **Exploit detection/prevention**

(30) Priority: 21.10.2013 US 201314059133
(71) Applicant: Trusteer Ltd., 67442 Tel Aviv (IL)
(72) Inventor: Klein, Amit, 46433 Herzliya (IL); Frishman, Gal, 42309 Holon (IL); Dycian, Yaron, 60920 Kadima (IL); Gideoni, Avner, 73134 Cfar Haoranim (IL); ELDAN, Ben Haim, Winchester Hampshire SO21 2JN (GB); Fraiman, Ilan, 79595 Tel Aviv (IL)
(74) Representative: Graham, Timothy Abbey

(57) **Abstract**

An Agent for detecting and/or preventing an Exploit attack, which comprises means for monitoring the operation of one or more process elements in a computer system; means for determining whether said one or more process elements has initiated, or is about to initiate a "create process" operation; and means for performing preventive activities as a result of the determination.

## Description

### Field of the Invention

The present invention relates to a method for protecting computer systems from malware infection. More particularly, the invention relates to the detection and prevention of the malware infection carried out via attacks known as "Exploitation attacks".

### Background of the Invention

Malware creators always look for ways to circumvent protections provided to computer systems, in order to deploy a so-called "malware" to computer systems, from which it can develop and infiltrate other subsystems. While different malware has different targets, the general-purpose is most often to extract unbeknownst to the computer user, information that has value for the malware developer, such as axis information to financial organizations, passwords and other personal information.

Since for the successful delivery of malware to a computer system the user of the system must not be aware that the deployment process is taking place, attackers often use apparently harmless websites for this purpose. One example is when a user is browsing in apparently legitimate website, which displays an advertisement, and another could be, for instance, allowing to download a brochure. When the brochure is downloaded, the PDF reader opens the PDF file, which is not a legitimate file but rather primes activities which are unusual for the reader, which includes downloading and executing a malicious file from the web. This process is known as "Drive by Download". It can be performed using a variety of readers and players, typically running files such as Java, PDF and Flash. It can also be targeting the browser itself. Such process can be performed singularly, or may be a part of a so-called "Exploit Kit", which is a "shrink-wrapped" system which can attempt several (sometimes dozens) of different exploits per the victim's OS, browser and plugin inventory, in order to maximize the likelihood of the victim being exploited.

In order to further illustrate the activities taking place inside the Adobe Reader process as it processes the (malicious) PDF file, the following is a typical exploitation flow:
1. The Acrobat reader process receives the PDF document.
2. Acrobat reader parses the PDF document and executes the scripts inside it.
3. The script exploits a vulnerability, e.g. a stack overflow (a vulnerability that is uncommon in present days), or a heap overflow, or a "use after free" condition, together with some method of preparing some memory area with desired values (e.g. with heap spraying) so that the Acrobat reader process now starts executing malicious instructions (as specified in the prepared memory section).
4. The malicious code then downloads the final payload from a URL found in the exploit code or in parameters provided to it, to a local file, e.g. in Windows to a random file name under the %TEMP% folder.
5. Finally, the exploit code runs the newly created file (e.g. in Windows by invoking CreateProcess Windows API).

It is an object of the present invention to provide means to detect an Exploit attempt, so as to be able to alert the user of its existence.

It is another object of the invention to provide means to prevent Exploit attempts.

Other objects and advantages of the invention will become apparent as the description proceeds.

### Summary of the Invention

An Agent for detecting and/or preventing an Exploit attack, comprises:
(a) means for monitoring the operation of one or more process elements in a computer system;
(b) means for determining whether said one or more process elements has initiated, or is about to initiate a "create process" operation; and
(c) means for performing preventive activities as a result of the determination.

According to an embodiment of the invention the process element consists of readers, players, browsers and the like software elements capable of initiating a process. According to another embodiment of the invention the Agent is suitable to intercept the creation of a process. The interception of process creation can be performed, for instance, by one or more of the following:
(a) in kernel (Windows XP), by hooking SSDT entry for NtCreateProcess.
(b) in kernel (Windows XP and above), by registering a Windows kernel Object Manager callback; or
(c) in userspace, by hooking CreateProcessA/CreateProcessW/CreateProcessExA/CreateProcessExW of potential invoking processes.

In one embodiment of the invention the Agent is suitable to inspect a process about to be created, e.g., by looking at the originating process and determining whether it is one susceptible of attack. Illustrative examples of processes to which the invention refer include those that originate from one of a browser, a viewer or a player.

In another embodiment of the invention the inspection of the process about to be created is carried out by looking at one or more of the following:
(d) the originating process data source;
(e) by looking at the location of about-to-be-launched process image;
(f) By looking at characteristics of the about-to-be-launched process image, such as size or digital signature.

The Agent of the invention can also be provided with a blacklist and/or whitelist of process images. In some embodiments of the invention the Agent is suitable to determine whether the launched process is used to launch/register another process and thereby to carry out the inspection of the process about to be created not on the process itself but, instead, on its target argument. The means for performing preventive activities may include software and the preventive activities may include generating an alert, either to the user or to a remote location.

The invention also encompasses a method for the detection and/or prevention of an Exploit attack, comprising:
(a) monitoring the operation of one or more reader and/or player in a computer system;
(b) determining whether said one or more reader and/or player has initiated, or is about to initiate a "create process" operation; and
performing preventive activities as a result of the determination, wherein said activities are selected from alerting a user and/or a remote location, and preventing the process being created from continuing.

According to an embodiment of the invention the method of the invention comprises intercepting the creation of a process, e.g., by one or more of the following:
(a) in kernel (Windows XP), by hooking SSDT entry for NtCreateProcess;
(b) in kernel (Windows XP and above), by registering a Windows kernel Object Manager callback;
(c) in userspace, by hooking CreateProcessA/CreateProcessW/CreateProcessExA/CreateProcessExW of potential invoking processes.

In an embodiment of the invention the method comprises inspecting a process about to be created, e.g., by looking at one or more of:
(a) the originating process, to determine whether it is one susceptible of attack;
(b) the originating process data source;
(c) the location of about-to-be-launched process image.

### Brief Description of the Drawings

In the drawings:

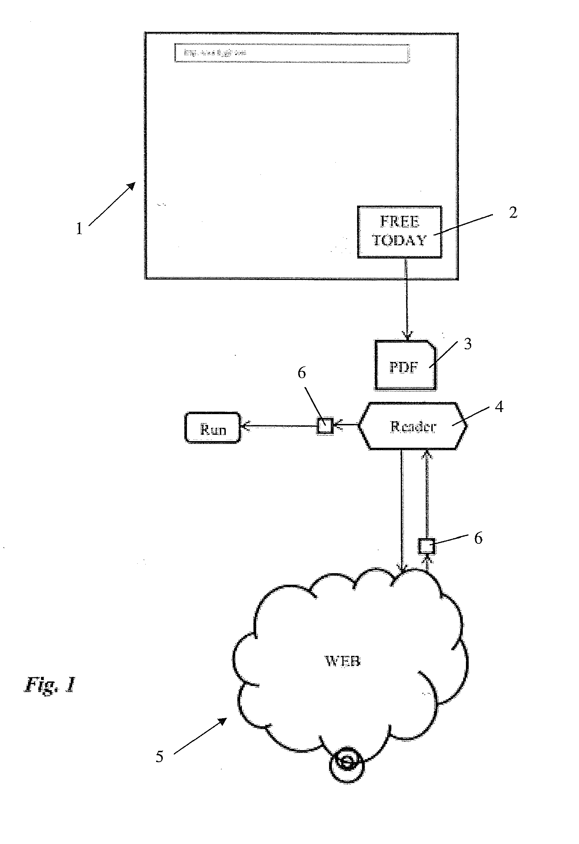

Fig. 1 illustrates a sample process by which a PDF reader is exploited.

### Detailed Description of the Invention

Fig. 1 schematically illustrates an example of an Exploit attack, using a PDF reader. As the skilled person will easily understand similar situations will exist when instead of a PDF reader a different reader or a player (e.g., a Flash player) is used, or a browser or an email client, and this particular example is provided for the sake of brevity, but is not meant to limit the invention in any way. As will be apparent to the skilled person, although Windows is used as a representative system, the invention is by no means limited to any specific operating system and Windows is only used because of its widespread use, which makes it a convenient example.

The process starts with a user surfing the web and reaching a page, generally indicated by numeral 1, which displays an advertisement 2. Clicking on the advertisement downloads a PDF file 3 (which can be disguised, for instance, as a brochure). When the PDF file is read by reader 4, it causes the reader 4 to access the web (generally indicated by numeral 5 and to download a malicious file 6. The reader 4 then causes the file 6 to be executed.

According to the invention this Exploit is detected and/or prevented, by providing an Agent in the user's system, which monitors the behavior of process elements, such as readers, players and browsers, and intervenes, either by generating an alert or by stopping the process, when a reader or player initiates a "create process" operation. For the purposes of this description a "process element" refers to any software that is capable of initiating a process. In many cases it is legitimate for such a process element to initiate a create process operation, and it is desirable to whitelist such legitimate cases. However, a small number of false positive responses (i.e., alerts that a potential Exploit situation is happening while the operation triggering this alert is legitimate) is acceptable, taking into account the severity of the outcome of such an attack.

In order to carry out the invention appropriate software must be provided to perform various operations, which will be collectively referred to herein as "Agent". The interception of process creation can be implemented by said Agent in several ways, e.g.:
a. In kernel (Windows XP), by hooking SSDT entry for NtCreateProcess;
b. In kernel (Windows XP and above), by registering a Windows kernel Object Manager callback
c. In userspace, by hooking CreateProcessA/CreateProcessW/CreateProcessExA/CreateProcessExW of potential invoking processes.

Once the interception of process creation is guaranteed, the Agent needs to inspect the process about to be created, by looking at:
- Originating process - e.g. whether it is a browser/viewer/player, in which case it is more susceptible to the attack;
- Originating process data source - e.g. in the case of Acrobat Reader, whether it is consuming a document coming from the Internet (more suspicious), or a document coming from a local file server (less suspicious);
- The about-to-be-launched process image - where it is located (typically for exploit kits, whether it is created in fully accessible locations such as %TEMP%, whereas system processes are launched from %Windows% or underneath it);
- Other characteristics of the about-to-be-launched process image, e.g. size, digital signature;
- The command line through which the process is launched (i.e. additional parameters provided to it) - possibly applying templates/regular expression to these in order to determine legitimacy or malice;
- Finally, a blacklist and whitelist may be applied for the about-to-be-launched process image, via a cryptographic hash (MD5/SHA1/SHA2/SHA3).

Note that when the launched process is used to launch/register another process, e.g. cmd.exe, java.exe, rundll32.exe or regsvr32.exe, the arguments about the "about to be launched process" should apply not to the process itself (cmd.exe, java.exe, rundll32.exe, regsvr32.exe respectively), but rather to the target argument of it (e.g. in the case of "cmd.exe /start *file" -* to *file*).

Accordingly, as will be easily understood by the skilled person, the invention provides a simple and yet powerful tool for preventing Exploit attacks, which can be easily implemented by operating as hereinbefore detailed.

All the above description and exemplary embodiment of the invention have been provided for the purpose of illustration and are not intended to limit the invention in any way except as provided for by the appended claims.

## Claims

1. An Agent for detecting and/or preventing an Exploit attack, comprising:
(a) means for monitoring the operation of one or more process elements in a computer system;
(b) means for determining whether said one or more process elements has initiated, or is about to initiate a "create process" operation; and
(c) means for performing preventive activities as a result of the determination.

2. The Agent of claim 1, wherein the process element consists of readers, players, browsers and the like software elements capable of initiating a process.

3. The Agent of claim 1, wherein process creation is intercepted by one or more of the following:
(a) in kernel (Windows XP), by hooking SSDT entry for NtCreateProcess.
(b) in kernel (Windows XP and above), by registering a Windows kernel Object Manager callback; or
(c) in userspace, by hooking CreateProcessA/CreateProcessW/CreateProcessExA/CreateProcessExW of potential invoking processes.

4. The Agent of claim 1, which is suitable to intercept the creation of a process or to inspect a process about to be created.

5. The Agent of claim 4, wherein inspection of the process about to be created is carried out by looking at the originating process and determining whether it is one susceptible of attack.

6. The Agent of claim 4, wherein the process originates from one of a browser, a viewer or a player.

7. The Agent of claim 4, wherein inspection of the process about to be created is carried out by looking at one or more of the following:
(a) the originating process data source;
(b) by looking at the location of about-to-be-launched process image;
(c) By looking at characteristics of the about-to-be-launched process image, such as size or digital signature.

8. The Agent of claim 5, which is provided with a blacklist and/or whitelist of process images.

9. The Agent of claim 4, which is suitable to determine whether the launched process is used to launch/register another process and thereby to carry out the inspection of the process about to be created not on the process itself but, instead, on its target argument.

10. The Agent of claim 1, wherein the preventive activities include generating an alert which is provided to the user or to a remote location.

11. A method for the detection and/or prevention of an Exploit attack, comprising:
(a) monitoring the operation of one or more reader and/or player in a computer system;
(b) determining whether said one or more reader and/or player has initiated, or is about to initiate a "create process" operation; and
(c) performing preventive activities as a result of the determination, wherein said activities are selected from alerting a user and/or a remote location, and preventing the process being created from continuing.

12. The method of claim 11, wherein process creation is intercepted by one or more of the following:
(a) in kernel (Windows XP), by hooking SSDT entry for NtCreateProcess;
(b) in kernel (Windows XP and above), by registering a Windows kernel Object Manager callback;
(c) in userspace, by hooking CreateProcessA/CreateProcessW/CreateProcessExA/CreateProcessExW of potential invoking processes.

13. The method of claim 11, comprising intercepting the creation of a process or inspecting a process about to be created.

14. The method of claim 13, wherein inspection of the process about to be created is carried out by looking at one or more of:
(d) the originating process, to determine whether it is one susceptible of attack;
(e) the originating process data source; and
(f) the location of about-to-be-launched process image.

15. The method of claim 13, wherein the process originates from one of a browser, a viewer or a player.
